# EUROPÄISCHE PATENTSCHRIFT

(11) **EP 0 476 476 B1**
(45) Veröffentlichungstag und Bekanntmachung des Hinweises auf die Patenterteilung: **30.11.1994**
(21) Anmeldenummer: 91115191.8
(22) Anmeldetag: 09.09.1991
(51) Int. Cl.: F16J 15/44, F16C 33/80

(54) **Dichtungsanordnung**
Sealing device
Joint d'étanchéité

(30) Priorität: 21.09.1990 DE 4029990
(43) Veröffentlichungstag der Anmeldung: 25.03.1992
(73) Patentinhaber: SIEMENS AKTIENGESELLSCHAFT, 80333 München (DE)
(72) Erfinder: Scharstein, Egbert, Dipl.-Ing., W-8500 Nürnberg (DE); Hölzel, Helmut, Dipl.-Ing., W-8546 Thalmässing (DE)

(56) Entgegenhaltungen:
- DE-A- 1 475 600
- KONSTRUKTION, Band 39, Nr. 3, März 1987, Seiten 107-113, Berlin, DE; W. HAAS et al.: "Berührungsfreie Wellendichtungen für flüssigkeitsbespritzte Dichtstellen"

## Beschreibung

Die Erfindung betrifft eine Dichtungsanordnung gemäß dem Oberbegriff des Anspruchs 1.

Eine solche Dichtungsanordnung ist durch das DE-U-87 15 621 bekannt. Diese Dichtungsanordnung besteht aus einer Labyrinthdichtung und mehreren gesonderten Bauteilen, die eine Abspritzfunktion für das in den Dichtspalt eingedrungene Öl ausüben.

Der Erfindung liegt die Aufgabe zugrunde, eine Dichtungsanordnung der eingangs beschriebenen Art so weiterzubilden, daß eine wirksame Abdichtung mit einem einteiligen Labyrinthdichtungskörper möglich ist.

Die Lösung der gestellten Aufgabe gelingt durch die im Kennzeichen des Anspruchs 1 angegebenen Merkmale. Durch den am Innenring des Wälzlagers vorgesehene Lagerbund ist eine sehr wirksame Abspritzkante gegeben, durch die ein sehr großer Teil des aus dem Lager austretenden Öles abgeschleudert und somit von dem Eintrittsspalt der Labyrinthdichtung ferngehalten wird. Wegen des gleichen Durchmessers von Ein- und Austrittsspalt der Labyrinthdichtung entstehen keine eine Ölförderung bewirkende Druckunterschiede zwischen der Ein- und Austrittsseite der Labyrinthdichtung. Damit wird durch die einzelnen Dichtspalte der Labyrinthdichtung eine ausreichende Abdichtung erzielt.

Vorteilhaft ist es im Anschluß an den Ringrand der Labyrinthdichtung eine Ölauffangrinne am Außenumfang des Körpers der Labyrinthdichtung vorzusehen, deren Größe in Abhängigkeit von der Menge des am Radialspalt abgeschleuderten Öles bemessen ist. Auch hierdurch wird sichergestellt, daß das abgeschleuderte Öl von dem Eintrittsspalt der Labyrinthdichtung ferngehalten wird. Durch die Ausbildung der Ölauffangrinne ergibt sich zwangsläufig ein relativ langer Axialspalt im Eintrittsbereich der Labyrinthdichtung durch den die Dichtwirkung ebenfalls verbessert wird.

Durch die entsprechend der anfallenden Ölmenge bemessenen Volumina der einzelnen Kammern ist gewährleistet, daß das Öl in den Kammern vollständig aufgenommen werden kann und nicht weiter nach außen gedrängt wird. Das Volumen der Kammern kann dabei zur Austrittsseite hin abnehmen, so daß sich eine Platzersparnis für die Labyrinthdichtung ergibt.

Zylinderrollenlager der Bauart N weisen am Innenring bereits einen Lagerbund auf, somit braucht keine Sonderausführung eines Lagers verwendet zu werden, um den erforderlichen Lagerbund zu haben.

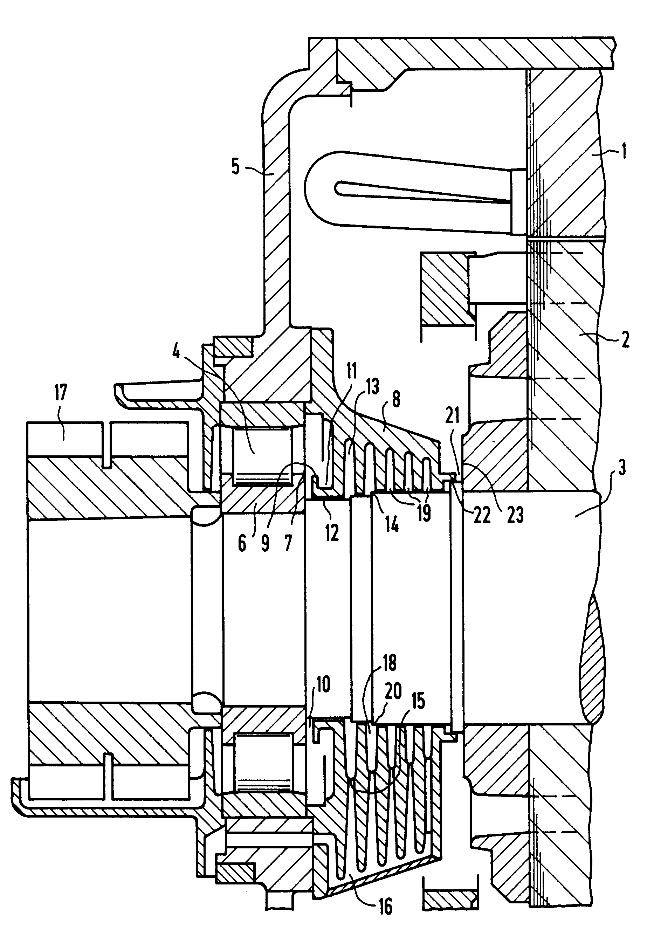

Anhand eines in der Zeichnung dargestellten Ausführungsbeispieles wird der Anmeldungsgegenstand nachfolgend näher beschrieben.

Mit 1 ist der Ständer und mit 2 der Läufer eines elektrischen Motors bezeichnet. Die Welle 3 des Läufers 2 ist mittels eines Zylinderrollenlagers 4 der Bauart N in einem am Motorgehäuse befestigten Lagerschild 5 gelagert. Derartige Zylinderrollenlager weisen am Innenring 6 einen Lagerbund 7 auf. Zur Läuferseite hin ist die das Zylinderrollenlager 4 aufnehmende Lagerbohrung mittels einer die Funktion eines Lagerdeckels ausübenden Labyrinthdichtung 8 verschlossen.

Am Körper der Labyrinthdichtung 8 ist ein sich zu dem Lagerbund 7 des Zylinderrollenlagers 4 parallel erstreckender Ringrand 9 ausgebildet. Die axiale Erstreckung der Labyrinthdichtung 8 ist so bemessen, daß der Ringrand 9 zusammen mit dem Lagerbund 7 einen schmalen radialen Eintrittsspalt 10 bildet. Im Anschluß an den Ringrand 9 ist am Außenumfang des Körpers der Labyrinthdichtung 8 eine Ölauffangrinne 11 ausgebildet, in der sich von dem Lagerbund 7 nach außen abgeschleudertes Öl sammelt und nach unten abfließt. Durch die Ausbildung dieser Ölauffangrille 11 ergibt sich im Eintrittsbereich der Labyrinthdichtung 8 ein relativ langer Axialspalt 12, der einen Durchtritt des Öles erschwert.

Im Anschluß an diesen Axialspalt 12 ist im Körper der Labyrinthdichtung 8 eine erste Kammer 13 vorgesehen, der eine erste Abstufung 14 der Welle 3 zugeordnet ist. Die Wellenabstufung 14 bildet eine Abspritzkante, durch die bis zu ihr vorgedrungenes Öl in die erste Kammer 13 abgeschleudert wird. Von den Wänden dieser Kammer 13 fließt das Öl über eine Abflußöffnung 15 einem Sammelkanal 16 zu. Dieser Sammelkanal 16 mündet in den Raum eines mit dem Motorgehäuse verbundenen Getriebegehäuses, das in der Zeichnung nicht dargestellt ist. Lediglich das mit der Welle 3 verbundene Ritzel 17 ist von dem Getriebe gezeigt.

Axial zur ersten Kammer 13 beabstandet sind eine zweite Kammer 18 und daran anschließend weitere Kammern 19 im Körper der Labyrinthdichtung 8 ausgebildet. Der zweiten Kammer 19 ist eine zweite Abstufung 20 der Welle 3 zugeordnet. Im Bereich der weiteren Kammer 19 sind keine weiteren Wellenabstufungen mehr vorgesehen. Es ist jedoch möglich auch in diesem Bereich Abstufungen an der Welle 3 anzubringen.

Der Austrittsspalt 21 der Labyrinthdichtung 8 wird zwischen einem am Körper der Labyrinthdichtung 8 angeformten, axial vorstehenden Kranz 22 und der einen Stirnseite 23 des Läufer 2 gebildet. Der Austrittsspalt 21 endet auf dem gleichen Durchmesser wie der Eintrittsspalt 10. Hierdurch werden Druckunterschiede zwischen der Ein- und Austrittsseite der Labyrinthdichtung 8 vermieden und somit ein weitgehend förderneutrales Labyrinth erreicht.

Bei der beschriebenen Dichtungsanordnung sind ohnehin vorhandene Bauteile, wie das Zylinderrollenlager 4 und die Welle 3, zusammen mit der Labyrinthdichtung 8 so gestaltet, daß eine sehr wirksame Abdichtung erreicht wird. Es entfallen somit weitere Konstruktionsteile.

## Patentansprüche

1. Dichtungsanordnung an einer mittels mindestens eines Ölgeschmierten Wälzlagers (4) gelagerten Welle (3) einer Maschine, insbesondere elektrische Maschine, welche Anordnung eine Labyrinthdichtung (8) aufweist, auf deren Eintrittsseite zwischen einem rotierenden Teil und einem an der Labyrinthdichtung angeformten Ringrand (9) ein radialer Eintrittsspalt (10) gebildet ist, bei welcher Anordnung ferner an der Welle (3) von im Körper der Labyrinthdichtung (8) ausgebildeten Kammern (13,18,19) überdeckte, Abspritzkanten bildende Abstufungen (14,20) vorgesehen sind, deren Durchmesser zum Austrittsspalt (21) der Labyrinthdichtung (8) hin zunimmt urd bei der die Kammern (13,18,19) mit einer Abflußöffnung (15) versehen sind, **dadurch gekennzeichnet,** daß auf der der Labyrinthdichtung (8) zugekehrten Seite am Innenring (6) des Wälzlagers (4) ein radial vorstehender Lagerbund (7) vorgesehen ist, der mit dem Ringrand (9) zusammen den radialen Eintrittsspalt (10) bildet, daß ferner der Eintritts-und Austrittsspalt (10 und 21) auf gleichem oder zumindest annähernd gleichem Durchmesser liegen.

2. Dichtungsanordnung nach Anspruch 1,
**dadurch gekennzeichnet**,
daß im Anschluß an den Ringrand (9) eine Ölauffangrinne (11) am Außenumfang des Körpers der Labyrinthdichtung (8) vorgesehen ist, deren Größe in Abhängigkeit von der Menge des am Eintrittsspalt (10) abgeschleuderten Öles bemessen ist.

3. Dichtungsanordnung nach Anspruch 1 oder 2,
**dadurch gekennzeichnet**,
daß das Volumen der einzelnen Kammern (13,18,19) entsprechend der anfallenden Ölmenge ausreichend groß bemessen ist und zur Austrittsseite der Labyrinthdichtung (8) hin abnimmt.

4. Dichtungsanordnung nach Anspruch 1,2 oder 3,
**dadurch gekennzeichnet**,
daß das Wälzlager ein Zylinderrollenlager (4) der Bauart N ist.

## Claims

1. A sealing arrangement on a shaft (3) of a machine, more particularly an electrical machine, the shaft being mounted by means of at least one oil-lubricated roller bearing (4), the sealing arrangement comprising a labyrinth seal (8), on whose inlet side a radial inlet slit (10) is formed between a rotating part and an annular rim (9) premolded onto the labyrinth seal, in which arrangement furthermore gradings (14, 20) are provided on the shaft (3), which form spray-off edges and are covered by chambers (13, 18, 19) disposed in the body of the labyrinth seal (10), the diameter of the gradings increasing in the direction of the outlet slit (21) and the chambers (13, 18, 19) being provided with a drain port (15), characterised in that a radially protruding bearing collar (7) is provided on the inner ring (6) of the roller bearing (4) on the side facing the labyrinth seal (8), which bearing coller (7) together with the annular rim (9) forms the radial inlet slit (10), and furthermore the inlet and outlet slits (10 and 21) are arranged on the same or at least approximately the same diameter.

2. A sealing arrangement according to claim 1, characterised in that an oil-collecting groove (11) is provided at the periphery of the body of the labyrinth seal (8) adjoining the annular rim (9), the size of the oil-collecting groove (11) being dimensioned in dependence upon the quantity of oil centrifuged off at the inlet slit (10).

3. A sealing arrangement according to claim 1 or 2, characterised in that the volume of the individual chambers (13, 18, 19) is adequately dimensioned according to the quantity of oil which accumulates and decreases in the direction of the outlet side of the labyrinth seal (8).

4. A sealing arrangement according to claim 1, 2 or 3, characterised in that the roller bearing is a cylinder roller bearing (4) of the N type of construction.

## Revendications

1. Dispositif d'étanchéité agencé sur un arbre (3), monté au moyen d'un roulement (4) lubrifié à l'huile, d'une machine, notamment d'une machine électrique, ce dispositif comportant un joint d'étanchéité à labyrinthe (8), sur le côté entrée duquel une fente radiale d'entrée (10) est formée entre une partie tournante et un bord annulaire (9) formé sur le joint d'étanchéité à labyrinthe, dispositif dans lequel, en outre, sur l'arbre (3) sont prévus des épaulements (14, 20), qui sont entourés par des chambres (13, 18, 19), formées dans le corps du joint d'étanchéité à labyrinthe (8), et forment des bords de nettoyage, et dont le diamètre augmente en direction de la fente de sortie (21) du joint d'étanchéité à labyrinthe (8), et dans lequel les chambres (13, 18, 19) comportent une ouverture d'évacuation (15), caractérisé par le fait que sur le côté tourné vers le joint d'étanchéité à labyrinthe (8), au niveau de la bague intérieure (6) du roulement (4) est prévu un flasque de roulement (7) qui fait saillie radialement et forme, conjointement avec le bord annulaire (9), la fente radiale d'entrée (10), et qu'en outre les fentes d'entrée et de sortie (10 et 21) sont situées sur un même diamètre ou sur un diamètre au moins approximativement identique.

2. Dispositif d'étanchéité suivant la revendication 1, caractérisé par le fait qu'en position adjacente au bord annulaire (9) est prévue, sur la périphérie extérieure du corps du joint d'étanchéité à labyrinthe (8), une gorge (11) de captage de l'huile, dont la taille est dimensionnée en fonction de la quantité de l'huile projetée au niveau de la fente d'entrée (10).

3. Dispositif d'étanchéité suivant la revendication 1 ou 2, caractérisé par le fait que le volume des différentes chambres (13, 18, 19) est dimensionné à une valeur suffisante en fonction de la quantité d'huile utilisée et diminue en direction du côté de sortie du joint d'étanchéité à labyrinthe (8).

4. Dispositif d'étanchéité suivant la revendication 1, 2 ou 3, caractérisé par le fait que le roulement est un roulement à rouleaux cylindriques (4) du type N.
